# FASCICULE DE BREVET EUROPEEN

(11) **EP 2 086 792 B1**
(45) Date de publication et mention de la délivrance du brevet: **27.01.2010**
(21) Numéro de dépôt: 07820672.9
(22) Date de dépôt: 28.09.2007
(51) Int. Cl.: B60P 1/28, B62D 33/06

(54) **CAISSON A GEOMETRIE VARIABLE POUR VEHICULE DE TRANSPORT**
BEHÄLTNIS MIT VARIABLER GEOMETRIE FÜR TRANSPORTFAHRZEUG
VARIABLE-GEOMETRY VESSEL FOR TRANSPORT VEHICLE

(30) Priorité: 31.10.2006 FR 0654679
(43) Date de publication de la demande: 12.08.2009
(73) Titulaire: De Carli, Jean-Claude, 06740 Châteauneuf de Grasse (FR)
(72) Inventeur: De Carli, Jean-Claude, 06740 Châteauneuf de Grasse (FR)
(74) Mandataire: Decobert, Jean-Pascal
(86) Numéro de dépôt international: PCT/EP2007/060284
(87) Numéro de publication internationale: WO 2008/052852

(56) Documents cités:
- DE-A1- 2 452 660
- DE-U1- 7 800 399
- US-A- 2 870 923
- US-A- 3 245 714

## Description

La présente invention concerne un caisson pour véhicule de transport de marchandises à basculement arrière, latéral ou bilatéral appelé communément benne, bi benne ou tri benne.

Elle trouvera son application, en particulier, pour le transport de matériaux ou de marchandises dans tous les domaines routiers, agricoles, forestiers, construction etc....

On connaît dans l'art antérieur des bennes pour véhicules terrestres destinées au transport de matériaux en vrac. Les parois de ces bennes ont une incurvation sensiblement progressive dénommée ci-après forme en U. L'incurvation des parois a l'avantage de centrer les matériaux en vrac au centre de la benne ce qui facilite en particulier le déchargement des matériaux.

On connaît aussi des caisses fixes ou amovibles destinées au transport de marchandises ou de matériaux conditionnés sous forme de palettes ou facilement stockables. Ces caisses sont sensiblement de forme parallélépipédique.

On connaît notamment le document DE7800399 U qui divulgue une plateforme arrière de camion de transport dont les parties inférieures des parois peuvent légèrement être repoussées vers l'extérieur pour faciliter l'insertion de caisse sur la plateforme. De même, le document US 3245714 décrit une plateforme de camion dont la longueur peut être augmentée. Les parois verticales sont déplacées dans leur totalité perpendiculairement au fond de la plateforme.

Il est par conséquent nécessaire d'avoir à disposition ces deux éléments de transport pour réaliser le transport de matériaux en vrac et le transport de marchandises conditionnées.

Sur un chantier de construction, il faut des caisses pour camion porteur ou remorque, pour amener les matériaux, les marchandises pour la construction et il faut aussi avoir à disposition des bennes pour camion pour débarrasser les gravats.

Ceci engendre des coûts supplémentaires et une gestion importante des différents types de véhicules.

Il apparaît donc le besoin de proposer un caisson pour véhicule de transport de forme variable pour s'adapter au transport de matériaux en vrac et au transport de marchandises conditionnées.

A cet effet, l'invention propose un caisson pour véhicule de transport de marchandises comportant deux parois latérales et un fond caractérisé par le fait qu'il comporte des moyens de déplacement transversal des parois latérales relativement au fond d'une position sensiblement perpendiculaire à une position dans laquelle les extrémités inférieures des parois latérales sont rapprochées et inversement.

L'invention a l'avantage de proposer un caisson de transport deux en un.

En effet, les parois latérales dudit caisson peuvent être déplacées, leur inclinaison modifiée pour passer d'un caisson de forme sensiblement rectangulaire à un caisson sensiblement en forme de U.

Ainsi sur un chantier de construction le véhicule de transport peut amener des marchandises conditionnées sur le chantier sous la forme de caisson sensiblement rectangulaire pour ensuite repartir du chantier sous la forme de caisson sensiblement en forme de U pour enlever les gravats.

Le terme marchandises est par la suite entendu au sens large du terme à savoir matériaux en vrac ou marchandises conditionnées ou autres.

Avantageusement, ce sont les extrémités inférieures desdites parois latérales dudit caisson qui sont déplacées transversalement.

Les moyens de déplacement transversal ont pour fonction d'incliner lesdites parois latérales pour passer d'un format caisson rectangulaire à un format caisson en forme de U.

D'autres buts et avantages apparaîtront au cours de la description qui suit un mode préféré de réalisation de l'invention qui n'est cependant pas limitatif.

Il convient de rappeler que l'invention propose un caisson pour véhicule de transport de marchandises comportant deux parois latérales et un fond caractérisé par le fait qu'il comporte des moyens de déplacement transversal des extrémités inférieures desdites parois latérales de sorte à incliner les parois latérales d'une position sensiblement perpendiculaire à une position dans laquelle les extrémités inférieures des parois latérales sont rapprochées et inversement.

Suivant des variantes préférées de l'invention ledit caisson est tel :
qu'il comporte des moyens de déplacement transversal des parois latérales relativement au fond.
que les moyens de déplacement transversal déplacent transversalement les extrémités inférieures desdites parois latérales.
que les moyens de déplacement transversal sont placés sensiblement perpendiculairement relativement aux parois latérales.
que lesdits moyens de déplacement transversal comprennent au moins une tige actionnée par des moyens d'actionnement.
que les moyens d'actionnement sont des vérins à double effet
que lesdits moyens de déplacement transversal coopèrent avec les parois latérales dans leurs parties inférieures.
que lesdites parois latérales comprennent en partie inférieure un élément de raccord destiné à coopérer avec lesdits moyens de déplacement transversal.
que lesdits moyens de déplacement transversal se situent sous le fond dudit caisson.
que le fond est muni d'ouvertures destinées à permettre le déplacement transversal des parois latérales relativement au fond.
qu'il comprend des ranchers aptes à coopérer avec les parois latérales dans leurs parties supérieures par des moyens de pivotement.
que lesdits moyens de pivotement sont constitués d'une lumière placée en partie supérieure du rancher prêt à recevoir un tenon situé en partie supérieure des parois latérales.
que chaque paroi latérale est déplacée par au moins deux moyens de déplacement transversal, de manière à répartir l'effort de déplacement.

Les dessins ci-joints sont donnés à titre d'exemple et ne sont pas limitatifs de l'invention. Ils représentent seulement un mode de réalisation de l'invention et permettront de la comprendre aisément.

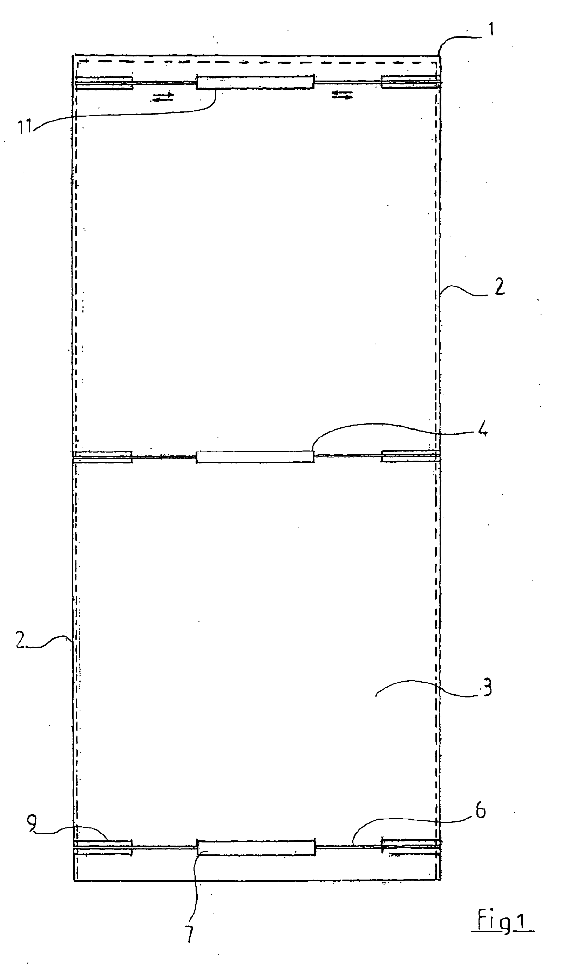

Figure 1 : Vue du dessous du caisson

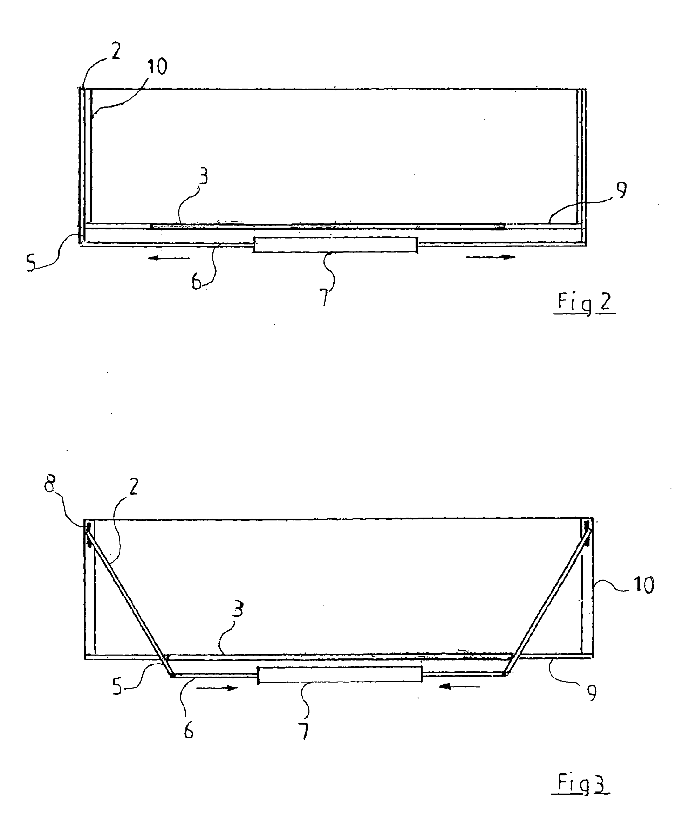

Figure 2 : Vue en coupe du caisson en position sensiblement rectangulaire
Figure 3 : Vue en coupe du camion en position sensiblement en forme de U.

L'invention concerne un caisson 1 pour véhicule de transport de marchandises comportant deux parois latérales 2 et un fond 3 caractérisé par le fait qu'il comporte des moyens de déplacement transversal 4 des parois latérales 2 relativement au fond 3.

Avantageusement lesdits moyens de déplacement 4 sont destinés à rapprocher transversalement les extrémités inférieures 5 desdites parois latérales 2.

Le déplacement transversal des extrémités inférieures 5 desdites parois latérales 2 est destiné à incliner lesdites parois latérales 2 de manière à transformer le caisson 1 de forme sensiblement rectangulaire en caisson de forme sensiblement en forme de U ou inversement.

Selon un mode de réalisation, lesdits moyens de déplacement transversal 4 sont placés sensiblement perpendiculaires relativement aux parois latérales 2.

Avantageusement, lesdits moyens de déplacement transversal 4 sont placés sous le fond 3 dudit caisson 1.

Selon un mode de réalisation, lesdits moyens de déplacement transversal 4 comprennent une tige 6 actionnée par des moyens d'actionnement 7.

Avantageusement, ladite tige 6 coopère par une des ses extrémités avec les parois latérales 2 dans leurs parties inférieures et par l'autre extrémité avec les moyens d'actionnement 7.

Avantageusement, ladite tige 6 est sensiblement parallèle audit fond 3.

Selon un mode de réalisation, lesdites parois latérales 2 comprennent en partie inférieure 5 un élément de raccord destiné à coopérer avec lesdits moyens de déplacement transversal 4.

L'élément de raccord est destiné à faire la liaison entre les parois latérales 2 et la tige 6 des moyens de déplacement transversal 4.

Avantageusement, ledit fond 3 dudit caisson 1 est muni d'ouvertures 9 destinée à permettre le déplacement transversal des parois latérales 2 relativement au fond 3.

En effet, les moyens de déplacement transversal 4 se situent sous le fond 3 et coopèrent avec les parois latérales 2 situées au dessus du fond 3. Le fond 3 est muni d'ouvertures 9 aptes à permettre le passage de la tige 6 et/ou de l'élément de raccord et/ou des parois latérales 2.

Selon un mode de réalisation, lesdites ouvertures 9 sont obturées par un plancher amovible.

Selon un mode de réalisation, lesdits moyens d'actionnement 7 sont des vérins à double effet.

Avantageusement, un vérin 11 à double effet est placé sous le fond 3 dudit caisson 1 sensiblement parallèle à celui-ci. Une tige 6 sort dudit vérin 11 à double effet et coopère avec l'extrémité inférieure des parois latérales 2, avantageusement par un élément de raccord. Lorsque le vérin 11 à double effet est actionné, celui-ci va modifier la longueur d'action de la tige 6 de manière à rapprocher l'extrémité inférieure 5 de la paroi latérale 2 au centre du caisson 1 ou l'en éloigner.

Ce déplacement transversal de la partie inférieure 5 de la paroi latérale 2 a pour effet d'incliner la paroi ou de la remettre en position verticale.

Selon un mode de réalisation, chaque paroi latérale 2 est déplacée par au moins deux vérins à double effet pour répartir les efforts de déplacement. Il peut y avoir deux vérins latéraux et un vérin central comme illustré.

Selon un mode de réalisation, ledit caisson 1 comprend des ranchers 10 aptes à coopérer avec les parois latérales 2 en partie supérieure par des moyens de pivotement.

Avantageusement, lesdits moyens de pivotement sont constitués d'une lumière 8 placée dans la partie supérieure dudit rancher 10 apte à recevoir un tenon situé en partie supérieure desdites parois latérales 2 formant un pivot monté dans une glissière.

Selon un autre mode de réalisation, le caisson 1 possède un panneau avant qui peut être fixe ou amovible.

Selon un autre mode de réalisation, un panneau arrière peut être ajouté. Ledit panneau arrière peut être amovible et posséder une ouverture parisienne, classique, à 90°, de bas en haut ou tout autre moyen connu.

Selon un mode de réalisation, les parois latérales 2 sont amovibles et peuvent se positionner dans le même plan que le fond 3 soit par vérin à commande hydraulique ou manuellement dans le cas d'application en bi benne ou en tri benne et selon le tonnage du véhicule.

Selon la taille du caisson 1, il peut y avoir deux ou plusieurs parois latérales 2 par côté.

Avantageusement, les parois latérales 2 sont alors fixées sur un ou plusieurs ranchers 10 centraux.

Ledit caisson 1 est adaptable sur tout type de véhicule de transport et peut être fixe ou inclinable en particulier pour le bennage.

### REFERENCES

- 1.: Caisson
- 2.: Parois latérales
- 3.: Fond
- 4.: Moyens de déplacement
- 5.: Extrémité inférieure
- 6.: Tige
- 7.: Moyens d'actionnement
- 8.: Lumière
- 9.: Ouvertures
- 10.: Ranchers
- 11.: Vérin

## Revendications

1. Caisson (1) pour véhicule de transport de marchandises comportant deux parois latérales (2) et un fond (3) **caractérisé par le fait**
**qu'**il comporte des moyens de déplacement transversal des extrémités inférieures desdites parois latérales (2) de sorte à incliner les parois latérales (2) d'une position sensiblement perpendiculaire à une position dans laquelle les extrémités inférieures des parois latérales (2) sont rapprochées et inversement.

2. Caisson (1) selon la revendication 1 **caractérisé par le fait**
**que** les moyens de déplacement transversal (4) sont placés sensiblement perpendiculairement relativement aux parois latérales (2).

3. Caisson (1) selon une quelconque des revendications précédentes **caractérisé par le fait**
**que** lesdits moyens de déplacement transversal (4) comprennent au moins une tige (6) actionnée par des moyens d'actionnement (7).

4. Caisson (1) selon la revendication 3 **caractérisé par le fait**
**que** les moyens d'actionnement (7) sont des vérins (11) à double effet.

5. Caisson (1) selon une quelconque des revendications précédentes **caractérisé par le fait**
**que** lesdits moyens de déplacement transversal (4) coopèrent avec les parois latérales (2) dans leurs parties inférieures (5).

6. Caisson (1) selon une quelconque des revendications précédentes **caractérisé par le fait**
**que** lesdites parois latérales (2) comprennent en partie inférieure (5) un élément de raccord destiné à coopérer avec lesdits moyens de déplacement transversal (4).

7. Caisson (1) selon une quelconque des revendications précédentes **caractérisé par le fait**
**que** lesdits moyens de déplacement transversal (4) se situent sous le fond (3) dudit caisson (1).

8. Caisson (1) selon une quelconque des revendications précédentes **caractérisé par le fait**
**que** le fond (3) est muni d'ouvertures (9) destinées à permettre le déplacement transversal des parois latérales (2) relativement au fond (3).

9. Caisson (1) selon une quelconque des revendications précédentes **caractérisé par le fait qu'**il comprend des ranchers (10) aptes à coopérer avec les parois latérales (2) dans leurs parties supérieures par des moyens de pivotement et de glissement.

10. Caisson (1) selon la revendication 9 **caractérisé par le fait**
**que** lesdits moyens de pivotement et de glissement sont constitués d'une lumière (8) placée en partie supérieure du rancher (10) apte à recevoir un tenon situé en partie supérieure des parois latérales (2).

11. Caisson (1) selon une quelconque des revendications précédentes **caractérisé par le fait**
**que** chaque paroi latérale (2) est déplacée par au moins deux moyens de déplacement transversal (4), de manière à répartir l'effort de déplacement.

## Claims

1. Vessel (1) for use on goods transport vehicles comprising two side walls (2) and a base (3) **characterised in that**
it has means for transverse movement of the lower edges of said side walls (2) so as to tilt side walls (2) from a roughly perpendicular position to a position in which lower edges of side walls (2) are brought closer together and vice versa.

2. Vessel (1) according to any of the preceding claims **characterised in that**
said means for transverse movement (4) are placed roughly perpendicular relative to side walls (2).

3. Vessel (1) according to any of the preceding claims **characterised in that**
said means for transverse movement (4) include at least one rod (6) actuated by activation means (7).

4. Vessel (1) according to claim 3 **characterised in that**
actuating means (7) are double-acting hydraulic cylinders (11).

5. Vessel (1) according to any of preceding claims **characterised in that**
said means for transverse movement (4) coact with side walls (2) in their lower parts (5).

6. Vessel (1) according to any of the preceding claims **characterised in that**
said side walls (2) include in their lower part (5) a connecting element designed to coact with said transverse movement means (4).

7. Vessel (1) according to any of preceding claims **characterised in that**
said transverse movement means (4) are located under the base (3) of said vessel (1).

8. Vessel (1) according to any of the preceding claims **characterised in that**
base (3) is provided with openings (9) to allow transverse movement of side walls (2) relative to base (3).

9. Vessel (1) according to any of the preceding claims **characterised in that**
it comprises stakes (10) able to co-act in their upper parts with side walls (2) through tilting and sliding means.

10. Vessel (1) according to claim 9 **characterised in that**
said tilting and sliding means consist of a hole (8) placed in the upper part of stake (10) able to receive a tenon situated in the upper part of side walls (2).

11. Vessel (1) according to any of the preceding claims **characterised in that**
each side wall (2) is moved by at least two transverse movement means (4) so as to distribute the displacement force.

## Patentansprüche

1. Kasten (1) für Fahrzeuge für den Gütertransport mit zwei Seitenwänden (2) und einem Boden (3), **gekennzeichnet dadurch, dass** er Mittel zum seitlichen Verschieben der unteren Enden der Seitenwände (2) besitzt, so dass die Seitenwände (2) aus einer annähernd senkrechten Stellung in eine Stellung gebracht werden können, in der die unteren Enden der Seitenwände (2) einander angenähert oder nicht angenähert sind.

2. Kasten (1) gemäß Patentanspruch 1, **gekennzeichnet dadurch, dass** die Mittel (4) zum seitlichen Verschieben annähernd rechtwinklig zu den Seitenwänden (2) angeordnet sind.

3. Kasten (1) gemäß einem der vorstehenden Patentansprüche, **gekennzeichnet dadurch, dass** die Mittel (4) zum seitlichen Verschieben mindestens eine Stange (6) besitzen, die von den Betätigungseinrichtungen (7) angetrieben wird.

4. Kasten (1) gemäß Patentanspruch 3, **gekennzeichnet dadurch, dass** die Betätigungseinrichtungen (7) doppeltwirkende Stellantriebe (11) sind.

5. Kasten (1) gemäß einem der vorstehenden Patentansprüche, **gekennzeichnet dadurch, dass** die Mittel (4) zum seitlichen Verschieben mit den Seitenwänden (2) in deren unterem Bereich (5) zusammenwirken.

6. Kasten (1) gemäß einem der vorstehenden Patentansprüche, **gekennzeichnet dadurch, dass** die Seitenwände (2) in ihrem unteren Bereich (5) ein Anschlusselement besitzen, das zum Zusammenwirken mit den genannten Mitteln (4) zum seitlichen Verschieben bestimmt ist.

7. Kasten (1) gemäß einem der vorstehenden Patentansprüche, **gekennzeichnet dadurch, dass** die Mittel (4) zum seitlichen Verschieben unter dem Boden (3) des Kastens (1) angeordnet sind.

8. Kasten (1) gemäß einem der vorstehenden Patentansprüche, **gekennzeichnet dadurch, dass** der Boden (3) mit Öffnungen (9) versehen ist, welche das seitliche Verschieben der Seitenwände (2) in Bezug auf den Boden (3) ermöglichen sollen.

9. Kasten (1) gemäß einem der vorstehenden Patentansprüche, **gekennzeichnet dadurch, dass** er Rungen (10) besitzt, die mit Hilfe von Schwenk- und Gleiteinrichtungen mit den Seitenwänden (2) in ihrem oberen Bereich zusammenwirken können.

10. Kasten (1) gemäß Patentanspruch 9, **gekennzeichnet dadurch, dass** die Schwenk- und Gleiteinrichtungen aus einer Öffnung (8) im oberen Bereich der Runge (10) bestehen, die einen im oberen Bereich der Seitenwände (2) vorgesehenen Zapfen aufnehmen kann.

11. Kasten (1) gemäß einem der vorstehenden Patentansprüche, **gekennzeichnet dadurch, dass** jede Seitenwand (2) von mindestens zwei der Mittel (4) zum seitlichen Verschieben bewegt wird, so dass die zum Verschieben notwendige Kraft verteilt wird.
